# EUROPÄISCHE PATENTSCHRIFT

(11) **EP 1 475 281 B1**
(45) Veröffentlichungstag und Bekanntmachung des Hinweises auf die Patenterteilung: **09.08.2006**
(21) Anmeldenummer: 04090158.9
(22) Anmeldetag: 22.04.2004
(51) Int. Cl.: B60R 22/34

(54) **Gurtaufroller und Gurtaufroller-Federkassettengehäuse für einen Gurtaufroller**
Belt retractor and cassette-like spring housing for a belt retractor
Enrouleur de ceinture et boîtier de ressort du type cassette pour enrouleur de ceinture

(30) Priorität: 08.05.2003 DE 10320836
(43) Veröffentlichungstag der Anmeldung: 10.11.2004
(73) Patentinhaber: TAKATA CORPORATION, Minato-ku, Tokyo 106-8510 (JP)
(72) Erfinder: Rüdiger, Paulsen, 89077 Ulm (DE); Fleischmann, Robert, 89233 Neu-Ulm (DE); Grasser, Thomas, 89186 Illerrieden (DE); Scholler, Oskar, 89269 Vöhringen (DE); Lamprecht, Stefan, 89275 Unterelchingen (DE); Benz, Jochen, 89231 Neu-Ulm (DE)
(74) Vertreter: Fischer, Uwe

(56) Entgegenhaltungen:
- EP-A- 0 115 919
- DE-A- 2 900 104
- US-A- 4 340 191
- US-A- 4 776 574

## Beschreibung

Die Erfindung bezieht sich auf ein Gurtaufroller-Federkassettengehäuse, das an einen Gurtaufroller anschließbar ist. Derartige Gurtaufroller-Federkassettengehäuse bzw. - deckel enthalten eine Triebfeder, die auf eine Gurtspindel des Gurtaufrollers ein derartiges Drehmoment ausübt, dass der Sicherheitsgurt des Gurtaufrollers aufgerollt wird.

Aus der US-Patentschrift 4,340,191 ist ein solches Gurtaufroller-Federkassettengehäuse mit einem Federherz zum Einhängen einer Triebfeder bekannt. Das Federherz weist zwei parallel verlaufende, versetzt zur Mittelachse des Federherzes angeordnete Schlitze auf, die ein Einhängen der Triebfeder ermöglichen.

Der Erfindung liegt die Aufgabe zugrunde, ein Gurtaufroller-Federkassettengehäuse anzugeben, das sich besonders einfach und damit kostengünstig herstellen und installieren lässt.

Diese Aufgabe wird erfindungsgemäß durch ein Gurtaufroller-Federkassettengehäuse mit den Merkmalen gemäß Anspruch 1 gelöst. Vorteilhafte Ausgestaltungen des erfindungsgemäßen Gurtaufroller-Federkassettengehäuses sind in Unteransprüchen angegeben.

Ein wesentlicher Vorteil des erfindungsgemäßen Gurtaufroller-Federkassettengehäuses ist darin zu sehen, dass dieses für unterschiedliche Aufroll-Drehrichtungen bzw. Gurtaufroll-Drehrichtungen eingesetzt werden kann; es muss lediglich je nach der gewünschten Gurtaufroll-Drehrichtung eine Triebfeder mit der passenden bzw. entsprechenden Drehmomentrichtung in das Gurtaufroller-Federkassettengehäuse eingebaut werden. Aufgrund des erfindungsgemäßen symmetrischen Aufbaus des Federherzes und/oder des Gurtaufroller-Federkassettengehäuses ist dies ohne weiteres möglich.

Besonders einfach und damit vorteilhaft lässt sich ein Gurtaufroller-Federkassettengehäuse durch ein Gurtaufroller-Federkassettendeckel bilden.

Der Erfindung liegt darüber hinaus die Aufgabe zugrunde, einen Gurtaufroller anzugeben, der sich besonders einfach und damit kostengünstig herstellen lässt.

Diese Aufgabe wird erfindungsgemäß durch einen Gurtaufroller mit den Merkmalen gemäß Patentanspruch 5 gelöst. Vorteilhafte Ausgestaltungen des erfindungsgemäßen Gurtaufrollers sind in Unteransprüchen angegeben.

Danach ist erfindungsgemäß vorgesehen, dass der Gurtaufroller eine FederkassettenAnschlussplatte aufweist, an der ein Gurtaufroller-Federkassettengehäuse gemäß einem der Ansprüche 1 bis 4 angeschlossen ist.

Ein wesentlicher Vorteil des erfindungsgemäßen Gurtaufrollers ist darin zu sehen, dass dieser sehr universell einsetzbar ist, weil aufgrund der Ausgestaltung der Federkassettenanschlussplatte die oben bereits erläuterten Gurtaufroller-Federkassettengehäuse bzw. Gurtaufroller-Federkassettendeckel mit beliebiger Gurtaufroll-Drehrichtung einsetzbar sind. Die Gurtaufroll-Drehrichtung des Gurtaufrollers wird damit durch die Drehmomentrichtung der Triebfeder des Gurtaufroller-Federkassettengehäuses bestimmt.

Vorteilhaft ist die Federkassettenanschlussplatte sowie der Gurtaufroller insgesamt derart symmetrisch aufgebaut, dass beliebige Gurtaufroll-Drehrichtungen der Gurtspindel möglich sind und damit die Gurtaufrollrichtung des Gurtaufrollers ausschließlich durch die Drehmomentrichtung der Triebfeder des Gurtaufroller-Federkassettengehäuses bzw. des Gurtaufroller-Federkassettendeckels festgelegt wird. Der Gurtaufroller kann damit auf einer beliebigen Fahrzeugseite eingesetzt werden, lediglich eine passende Triebfeder ist einzusetzen.

Darüber hinaus wird es als vorteilhaft angesehen, wenn der Gurtaufroller eine Sensor-Vorrichtung, insbesondere eine Gurtbandsensoreinrichtung oder einen Fahrzeugsensor, aufweist.

Vorzugsweise ist die Sensor-Vorrichtung derart ausgestaltet, dass ein Gurtaufroller-Federkassettengehäuse nach Anspruch 1 oder 2 daran montierbar ist.

Gemäß einer weiteren bevorzugten Ausgestaltung des Gurtaufrollers ist vorgesehen, dass die Sensor-Vorrichtung derart ausgestaltet ist, dass bei einem Anschluss des Gurtaufroller-Federkassettengehäuses nach Anspruch 1 oder 2 eine Kraftübertragung zwischen der Triebfeder und der Gurtspindel des Gurtaufrollers gewährleistet ist.

Die Federkassettenanschlussplatte kann dabei vorzugsweise durch eine Außenseite der Sensor-Vorrichtung gebildet sein.

Alternativ können die Sensor-Vorrichtung und die Federkassettenanschlussplatte auf unterschiedlichen Seiten des Gurtaufrollers angeordnet sein.

Zur Erläuterung der Erfindung zeigen:
- Fig. 1: ein erstes Ausführungsbeispiel für einen erfindungsgemäßen Gurtaufroller, bei dem ein Ausführungsbeispiel für einen erfindungsgemäßen Gurtaufroller-Federkassettendeckel auf derselben Seite wie eine Sensor-Vorrichtung des Gurtaufrollers montiert ist,
- Fig. 2: ein zweites Ausführungsbeispiel für einen erfindungsgemäßen Gurtaufroller, bei dem ein Ausführungsbeispiel für einen erfindungsgemäßen Gurtaufroller-Federkassettendeckel auf derselben Seite wie eine Sensor-Vorrichtung des Gurtaufrollers montiert ist,
- Fig. 3: ein drittes Ausführungsbeispiel für einen erfindungsgemäßen Gurtaufroller, bei dem die Sensor-Vorrichtung des Gurtaufrollers und die Federkassetten-Seite des Gurtaufrollers auf unterschiedlichen Seiten liegen,
- Fig. 4a und 4b: ein Ausführungsbeispiel für einen erfindungsgemäßen Gurtaufroller-Federkassettendeckel und
- Fig. 5: Konstruktionszeichnungen für den Gurtaufroller-Federkassettendeckel gemäß Figuren 4a und 4b im Detail.

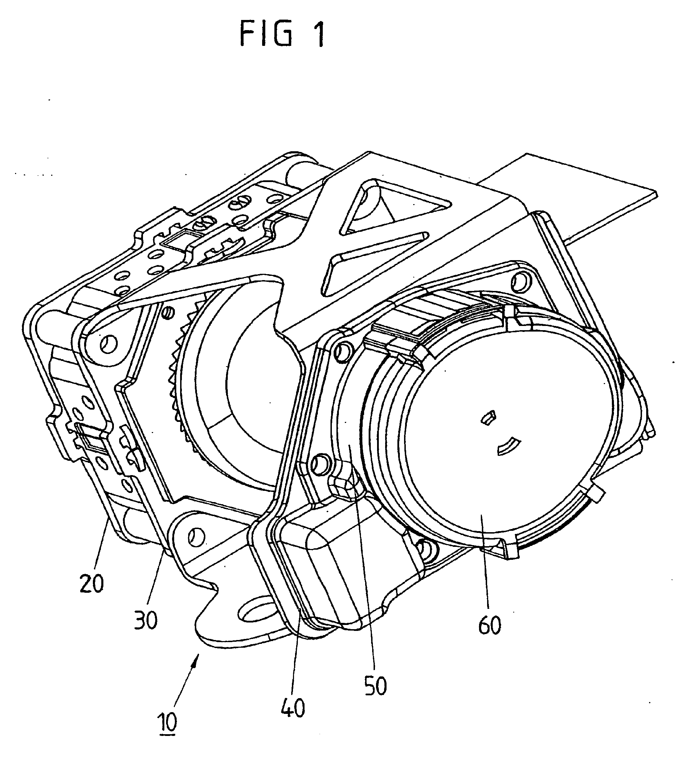

In der Figur 1 erkennt man einen Gurtaufroller 10, der mit einer Straffeinrichtung 20 auf einer Seite 30 des Gurtaufrollers ausgestattet ist. Auf der der Seite 30 gegenüberliegenden Seite 40 ("Mechanismusseite") ist eine Sensor-Vorrichtung 50 montiert, die beispielsweise eine Gurtbandsensoreinrichtung und/oder einen Fahrzeugsensor enthalten kann. Auf der Außenseite der Sensor-Vorrichtung 50 ist ein in der Figur nicht explizit gekennzeichnete Federkassettenanschlussplatte ausgebildet, auf der ein Gurtaufroller-Federkassettendeckel 60 befestigt ist. Der Gurtaufroller-Federkassettendeckel 60 befindet sich somit auf der "Mechanismusseite" 40 des Gurtaufrollers 10.

Bei dem Gurtaufroller 10 ist die Straffeinrichtung 20 auf der in der Figur 1 hinteren Seite angeordnet; die Sensor-Vorrichtung 50 und der Gurtaufroller-Federkassettendeckel 60 sind auf der in der Figur 1 vorderen Seite angebracht. Vorzugsweise ist der Gurtaufroller derart "spiegelsymmetrisch" ausgestaltet, dass die Anordnung der Straffeinrichtung 20, der Sensor-Vorrichtung 50 und des Gurtaufroller-Federkassettendeckels 60 auch umgekehrt sein kann. Dies bedeutet konkret, dass bei dem Gurtaufroller 10 die Straffeinrichtung 20 auch auf der in der Figur 1 vorderen Seite angeordnet sein kann; die Sensor-Vorrichtung 50 und der Gurtaufroller-Federkassettendeckel 60 wären dann an der in der Figur 1 hinteren Seite anzubringen.

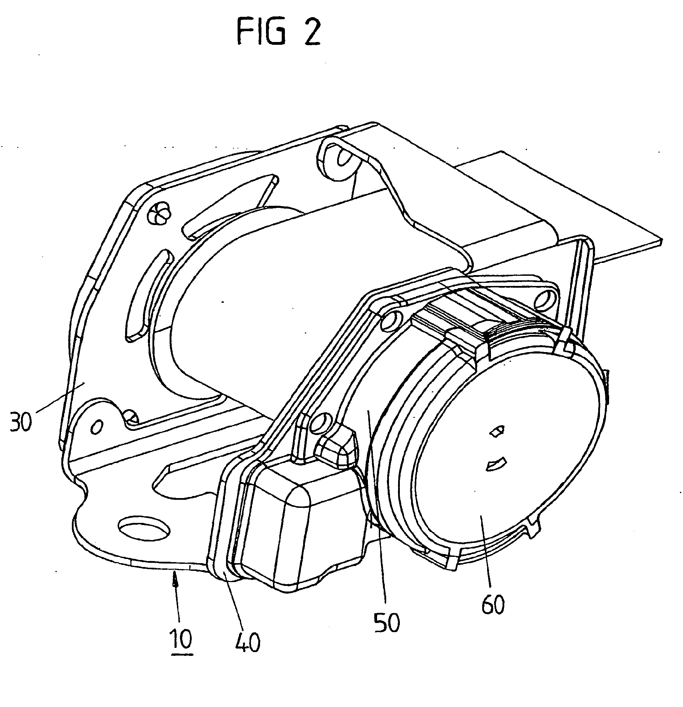

In der Figur 2 ist ein weiteres Ausführungsbeispiel für einen erfindungsgemäßen Gurtaufroller dargestellt. Im Gegensatz zu dem Gurtaufroller 10 gemäß der Figur 1 weist der Gurtaufroller gemäß der Figur 2 keine Straffeinrichtung 20 auf. Auch bei dem Gurtaufroller gemäß der Figur 2 ist der Gurtaufroller-Federkassettendeckel 60 auf der "Mechanismusseite" 40 des Gurtaufrollers angeordnet.

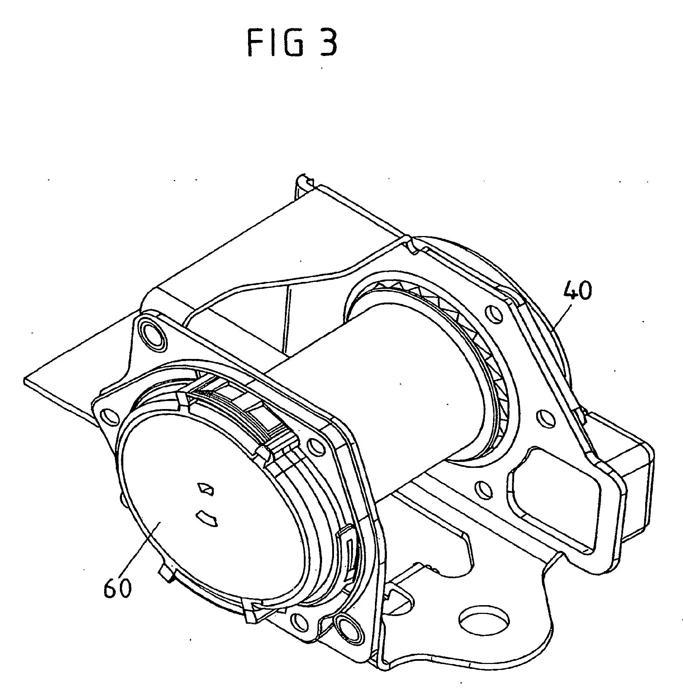

In der Figur 3 ist ein Ausführungsbeispiel für einen Gurtaufroller gezeigt, bei dem die Mechanismusseite 40 (Seite mit der Sensor-Vorrichtung 50) von der Federkassettenanschlussplatte und dem Gurtaufroller-Federkassettendeckel 60 getrennt ist; konkret sind die Sensor-Vorrichtung 50 und der Gurtaufroller-Federkassettendeckel 60 auf unterschiedlichen Seiten des Gurtaufrollers angeordnet.

Der Gurtaufroller-Federkassettendeckel 60 ist also derart ausgestaltet, dass er sowohl auf der Mechanismusseite 40 - und damit auf der Außenseite der Sensor-Vorrichtung 50 - als auch auf der gegenüberliegenden Seite 30 montiert werden kann.

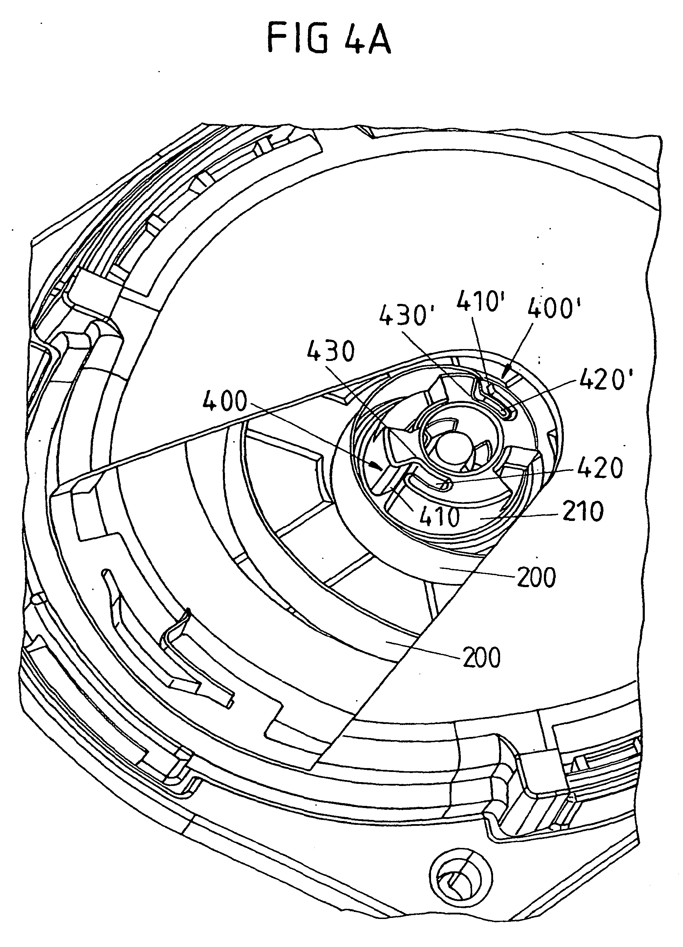

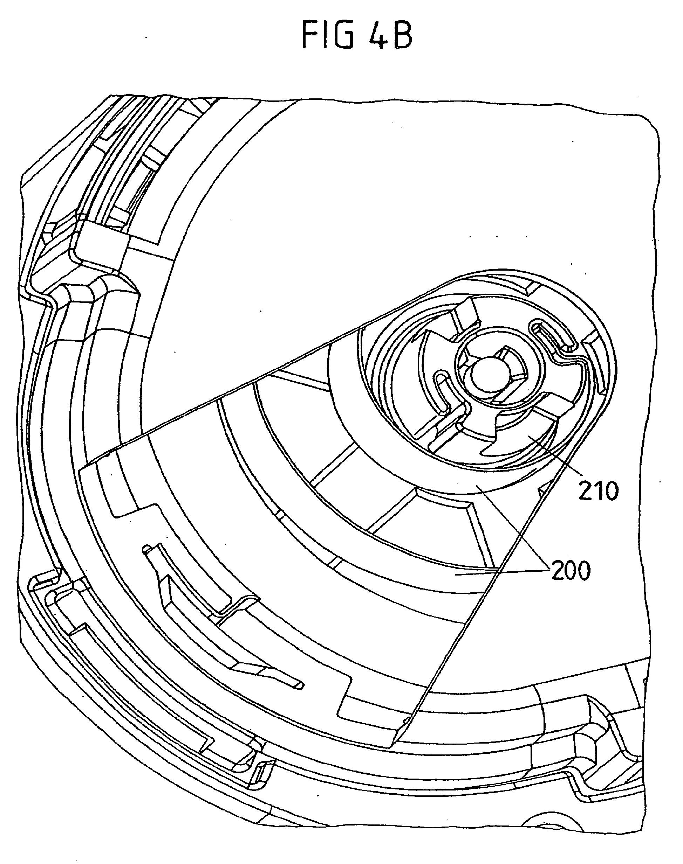

In den Figuren 4a und 4b ist jeweils in einer dreidimensionalen Darstellung dargestellt, wie der Gurtaufroller-Federkassettendeckel 60 gemäß der Figur 3 bzw. der Gurtaufroller-Federkassettendeckel gemäß den Figuren 1 und 2 im "Inneren" aufgebaut sein kann. Man erkennt eine Triebfeder 200, die in einem Federherz 210 gehalten ist.

Man erkennt in den Figuren 4a und 4b darüber hinaus, dass die Fixierung der Triebfeder 200 im Gurtaufroller-Federkassettendeckel 110 symmetrisch ist. Auch ist die Federfixierung im Federherz 210 symmetrisch.

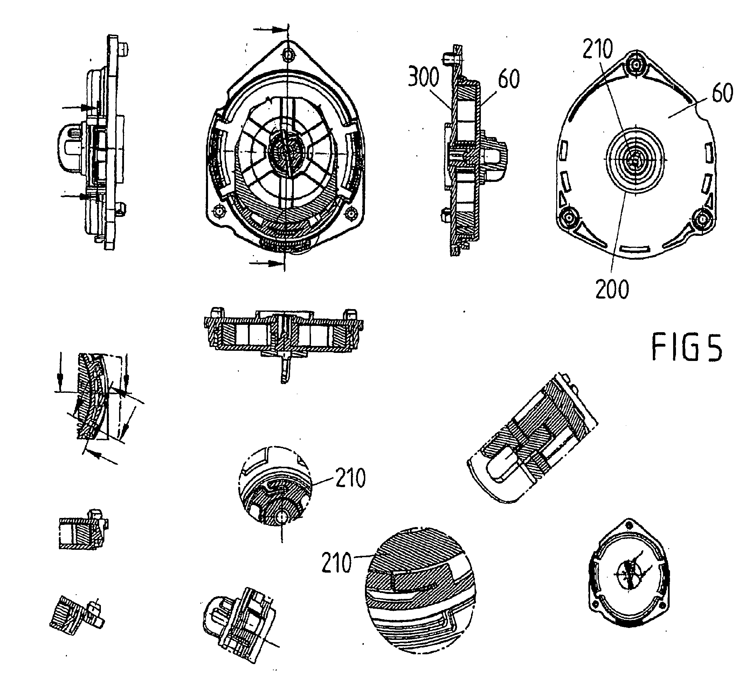

In der Figur 5 ist der Gurtaufroller-Federkassettendeckel 60 gemäß den Figuren 4a und 4b nochmals in einer Detaildarstellung gezeigt. Konkret zeigt die Figur 5 Konstruktionszeichnungen des Gurtaufroller-Federkassettendeckels 60 mit unterschiedlichen Querschnitten und Ansichten. Dabei ist der Gurtaufroller-Federkassettendeckel 60 bereits an einer Federkassettenanschlussplatte 300 befestigt, die später wiederum an dem Gurtaufroller befestigt wird.

In der Figur 5 erkennt man darüber hinaus die Triebfeder 200, die in dem Federherz 210 gehalten wird. Die Befestigung der Triebfeder 200 in dem Federherz 210 ist dabei in Detailansichten im Einzelnen dargestellt.

### Bezugszeichenliste

| | |
|---|---|
| 10 | Gurtaufroller |
| 20 | Straffeinrichtung |
| 30 | Eine Seite des Gurtaufrollers |
| 40 | Mechanismusseite bzw. -platte des Gurtaufrollers |
| 50 | Sensor-Vorrichtung |
| 60 | Gurtaufroller-Federkassettendeckel |
| 200 | Triebfeder |
| 210 | Federherz |
| 300 | Federkassettenanschlussplatte |

## Patentansprüche

1. Gurtaufroller-Federkassettengehäuse (60) mit einem Federherz (210) und einer Triebfeder (200), die in dem Federherz (210) gehalten wird, wobei das Gurtaufroller-Federkassettengehäuse (10) und/oder das Federherz (200) derart symmetrisch ausgestaltet sind, dass die Triebfeder (200) eine beliebige Drehmomentrichtung aufweisen kann, wobei das Federherz zwei Aufnahmeöffnungen (400, 400') aufweist, die zum Einhängen der Triebfeder (200) geeignet sind,
**dadurch gekennzeichnet, dass**
- jede der beiden Aufnahmeöffnungen (400, 400') jeweils einen Austrittsschlitz (410, 410'), aus dem die Triebfeder im Falle eines Einhängen aus dem Federherz austritt, sowie ein sich an den Austrittsschlitz (410, 410') anschließenden Einhängbereich (420, 420') aufweist,
- wobei sich die Einhängbereiche (420, 420') jeweils konzentrisch zur Mittelachse des Federherzes (200) erstrecken und
- wobei sich der Einhängbereich (420) der einen Aufnahmeöffnung (400) von seinem zugeordneten Austrittsschlitz (410) aus gesehen entgegen der Uhrzeigerrichtung und der Einhängbereich (420') der anderen Aufnahmeöffnung (400') von seinem zugeordneten Austrittsschlitz (410') aus gesehen entlang der Uhrzeigerrichtung erstreckt.

2. Gurtaufroller-Federkassettengehäuse nach Anspruch 1, **dadurch gekennzeichnet, dass** zwischen den Austrittschlitzen (410, 410') und den Einhängbereichen (420, 420') jeweils ein Krümmungsbereich (430, 430') liegt, dessen Krümmung einen rechten Winkel bildet.

3. Gurtaufroller-Federkassettengehäuse nach einem der vorangehenden Ansprüche, **dadurch gekennzeichnet, dass** sich die beiden Aufnahmeöffnungen (400, 400') diametral gegenüberliegen.

4. Gurtaufroller-Federkassettengehäuse nach einem der vorangehenden Ansprüche, **dadurch gekennzeichnet, dass** das Gurtaufroller-Federkassettengehäuse durch einen Gurtaufroller-Federkassettendeckel (60) gebildet ist.

5. Gurtaufroller (10) mit einem Gurtaufroller-Federkassettengehäuse nach einem der voranstehenden Ansprüche 1-4 und einer Federkassettenanschlussplatte (300), an die das Gurtaufroller-Federkassettengehäuse angeschlossen ist.

6. Gurtaufroller nach Anspruch 5, **dadurch gekennzeichnet, dass** der Gurtaufroller (10) derart ausgestaltet ist, dass beliebige Gurtaufroll-Drehrichtungen der Gurtspindel möglich sind und die Gurtaufrollrichtung des Gurtaufrollers ausschließlich durch die Drehmomentrichtung der Triebfeder (200) bestimmt ist.

7. Gurtaufroller nach einem der vorangehenden Ansprüche 5-6, **dadurch gekennzeichnet, dass** der Gurtaufroller (10) mindestens eine Sensor-Vorrichtung, insbesondere eine Gurtband-Sensoreinrichtung und/oder einen Fahrzeugsensor, aufweist.

8. Gurtaufroller nach Anspruch 7, **dadurch gekennzeichnet, dass** die Sensor-Vorrichtung (50) derart ausgestaltet ist, dass das Gurtaufroller-Federkassettengehäuse (60) daran montierbar ist.

9. Gurtaufroller nach Anspruch 8, **dadurch gekennzeichnet, dass** die Sensor-Vorrichtung (50) derart ausgestaltet ist, dass bei einer Montage des Gurtaufroller-Federkassettengehäuses eine Kraftübertragung zwischen der Triebfeder (200) des Gurtaufroller-Federkassettengehäuses und der Gurtspindel des Gurtaufrollers gewährleistet ist.

10. Gurtaufroller nach einem der vorangehenden Ansprüche 5-9, **dadurch gekennzeichnet, dass** die Federkassettenanschlussplatte (300) durch eine Außenseite der Sensor-Vorrichtung (50) gebildet ist.

11. Gurtaufroller, nach einem der vorangehenden Ansprüche 5 bis 9, **dadurch gekennzeichnet, dass** die Sensor-Vorrichtung (50) und die Federkassettenanschlussplatte (300) auf unterschiedlichen Seiten des Gurtaufrollers angeordnet sind.

## Claims

1. Belt-retractor spring-cassette housing (60) having a spring core (210) and a driving spring (200) which is held in the spring core (210), the belt-retractor spring-cassette housing (10) and/or the spring core (200) being designed symmetrically in such a manner that the driving spring (200) can have any desired torque direction, the spring core having two receiving openings (400, 400') which are suitable for the hooking in of the driving spring (200), **characterized in that**
- each of the two receiving openings (400, 400') in each case has an outlet slot (410, 410') from which the driving spring emerges in the event of being unhooked from the spring core, and a hook-in region (420, 420') adjoining the outlet slot (410, 410'),
- the hook-in regions (420, 420') in each case extending concentrically with the central axis of the spring core (200), and
- the hook-in region (420) of the one receiving opening (400) extending anticlockwise, as seen from its associated outlet slot (410), and the hook-in region (420') of the other receiving opening (400') extending in the clockwise direction, as seen from its associated outlet slot (410').

2. Belt-retractor spring-cassette housing according to Claim 1, **characterized in that** a region of curvature (430, 430'), the curvature of which forms a right angle, is situated in each case between the outlet slots (410, 410') and the hook-in regions (420, 420').

3. Belt-retractor spring-cassette housing according to one of the preceding claims, **characterized in that** the two receiving openings (400, 400') lie diametrically opposite each other.

4. Belt-retractor spring-cassette housing according to one of the preceding claims, **characterized in that** the belt-retractor spring-cassette housing is formed by a belt-retractor spring-cassette cover (60).

5. Belt-retractor (10) having a belt-retractor spring-cassette housing according to one of the preceding claims 1 to 4 and a spring-cassette connecting plate (300) to which the belt-retractor spring-cassette housing is connected.

6. Belt retractor according to Claim 5, **characterized in that** the belt retractor (10) is designed in such a manner that any desired belt-retracting directions of rotation of the belt spindle are possible, and the belt-retracting direction of the belt retractor is determined exclusively by the torque direction of the driving spring (200).

7. Belt retractor according to one of the preceding Claims 5-6, **characterized in that** the belt retractor (10) has at least one sensor device, in particular a belt-strap sensor device and/or a vehicle sensor.

8. Belt retractor according to Claim 7, **characterized in that** the sensor device (50) is designed in such a manner that the belt-retractor spring-cassette housing (60) can be fitted on it.

9. Belt retractor according to Claim 8, **characterized in that** the sensor device (50) is designed in such a manner that, when the belt-retractor spring-cassette housing is installed, a transmission of force between the driving spring (200) of the belt-retractor spring-cassette housing and the belt spindle of the belt retractor is ensured.

10. Belt retractor according to one of the preceding Claims 5-9, **characterized in that** the spring-cassette connecting plate (300) is formed by an outer side of the sensor device (50).

11. Belt retractor according to one of the preceding Claims 5 to 9, **characterized in that** the sensor device (50) and the spring-cassette connecting plate (300) are arranged on different sides of the belt retractor.

## Revendications

1. Boîtier de ressort du type cassette de l'enrouleur de ceinture (60) avec un coeur de ressort (210) et un ressort d'entraînement (200) qui est maintenu dans le coeur de ressort (210), le boîtier de ressort du type cassette de l'enrouleur de ceinture (10) et/ou le coeur de ressort (200) étant configurés symétriquement, de façon que le ressort d'entraînement (200) puisse présenter une direction de moment de couple quelconque, le coeur de ressort présentant deux ouvertures de réception (400, 400') qui sont appropriées à l'accrochage du ressort d'entraînement (200),
**caractérisé en ce que**
- chacune des deux ouvertures de réception (400, 400') présente une fente de sortie (410, 410') à partir de laquelle sort le ressort d'entraînement dans le cas d'un accrochage à partir du coeur de ressort, ainsi qu'une zone d'accrochage (420, 420') se raccordant à la fente de sortie (410, 410'),
- les zones d'accrochage (420, 420') s'étendant respectivement de façon concentrique par rapport à l'axe médian du coeur de ressort (200), et
- la zone d'accrochage (420) de l'une des ouvertures d'accrochage (400) s'étend dans la direction contraires aux aiguilles d'une montre par rapport à sa fente de sortie affectée (410) et la zone d'accrochage (420') de l'autre ouverture de réception (400') s'étend dans le sens des aiguilles d'une montre par rapport à sa fente de sortie affectée (410').

2. Boîtier de ressort du type cassette de l'enrouleur de ceinture selon la revendication 1, **caractérisé en ce qu'**entre les fentes de sortie (410, 410') et les zones d'accrochage (420, 420'), se situe une zone de courbure (430, 430') dont la courbure forme un angle droit.

3. Boîtier de ressort du type cassette de l'enrouleur de ceinture selon l'une quelconque des revendications précédentes, **caractérisé en ce que** les deux ouvertures de réception (400, 400') sont diamétralement opposées entre elles.

4. Boîtier de ressort du type cassette de l'enrouleur de ceinture selon l'une quelconque des revendications précédentes, **caractérisé en ce que** le boîtier de ressort du type cassette de l'enrouleur de ceinture est formé par un couvercle de cassette à ressort de l'enrouleur de ceinture (60).

5. Enrouleur de ceinture (10) avec un boîtier de cassette à ressort de l'enrouleur de ceinture selon l'une quelconque des revendications précédentes 1-4 et une plaque de raccordement de cassette de ressort (300) sur laquelle est raccordé le boîtier de ressort de cassette de l'enrouleur de ceinture.

6. Enrouleur de ceinture selon la revendication 5, **caractérisé en ce que** l'enrouleur de ceinture (10) est conçu de telle sorte que toutes les directions de rotation d'enroulement de ceinture de la broche de ceinture sont possibles et la direction d'enroulement de ceinture de l'enrouleur de ceinture est déterminée exclusivement par la direction du couple de rotation du ressort d'entraînement (200).

7. Enrouleur de ceinture selon l'une quelconque des revendications précédentes 5-6, **caractérisé en ce que** l'enrouleur de ceinture (10) présente au moins un dispositif capteur, en particulier un dispositif capteur de ceinture et/ou un capteur de véhicule.

8. Enrouleur de ceinture selon la revendication 7, **caractérisé en ce que** le dispositif capteur (50) est conçu de telle sorte que le boîtier de cassette de ressort de l'enrouleur de ceinture (60) peut y être monté.

9. Enrouleur de ceinture selon la revendication 8, **caractérisé en ce que** le dispositif capteur (50) est conçu de telle sorte que lors du montage du boîtier de cassette à ressort de l'enrouleur de ceinture, une transmission de force est assurée entre le ressort d'entraînement (200) du boîtier de cassette à ressort de l'enrouleur de ceinture et la broche de ceinture de l'enrouleur de ceinture.

10. Enrouleur de ceinture selon l'une quelconque des revendications précédentes 5-9, **caractérisé en ce que** la plaque de raccordement de cassette à ressort (300) est formée par un côté extérieur du dispositif de capteur (50).

11. Enrouleur de ceinture selon l'une quelconque des revendications précédentes 5 à 9, **caractérisé en ce que** le dispositif capteur (50) et la plaque de raccordement de cassette à ressort (300) sont disposés sur différents côtés de l'enrouleur de ceinture.
